Europäisches Patentamt

European Patent Office

Office européen des brevets

(19)

(11) Veröffentlichungsnummer: **0 305 690 B1**

# EUROPÄISCHE PATENTSCHRIFT

(12)

(45) Veröffentlichungstag der Patentschrift: **11.11.92**

(51) Int. Cl.5: **B60J 7/08**

(21) Anmeldenummer: **88111125.6**

(22) Anmeldetag: **12.07.88**

(54) **Umwandelbarer Personenwagen.**

(30) Priorität: **04.09.87 DE 3729557**

(43) Veröffentlichungstag der Anmeldung:
**08.03.89 Patentblatt 89/10**

(45) Bekanntmachung des Hinweises auf die
Patenterteilung:
**11.11.92 Patentblatt 92/46**

(84) Benannte Vertragsstaaten:
**DE ES FR GB IT**

(56) Entgegenhaltungen:
**DE-A- 3 613 772**

(73) Patentinhaber: **Dr.Ing.h.c. F. Porsche Aktiengesellschaft
Porschestrasse 42
W-7000 Stuttgart 40(DE)**

(72) Erfinder: **Kolb, Eugen
Ernst-Bloch-Weg
W-7000 Stuttgart 30(DE)**
Erfinder: **Uerlings, Rainer, Dipl.-Ing. FH
Aichingerstrasse 40
W-7255 Rutesheim(DE)**
Erfinder: **Altmann, Winfried
Bahnhofstrasse 33
W-7251 Weissach(DE)**

**Beschreibung**

Die Erfindung bezieht sich auf einen umwandelbaren Personenwagen mit seitlichen Türen und einem Fahrgastraum, der mit einer einstückigen formsteifen Abdeckung versehen ist, die etwa in Höhe der Gürtellinie des offenen Aufbaus verläuft und mit Ausnahme eines länglichen Ausschnittes für den Fahrer den gesamten Fahrgastraum verschließt, wobei zumindest ein vorderer und seitliche Teilbereiche des Ausschnittes von einer, eine geringe Höhe aufweisenden Sichtscheibe umgeben sind.

Ein bekannter Personenwagen der eingangs genannten Gattung (Fachzeitschrift "Car-Styling", Heft 17, 1977, Seiten 25 bis 31, Fahrzeugstudie Pininfarina 104 Peugette) läßt sich durch Verändern des Aufbaus oberhalb der Gürtellinie in verschiedene Versionen umwandeln. Unter anderem ist auch eine Clubsportversion vorgesehen, bei der die ursprüngliche Windschutzscheibe abgenommen und der Fahrgastraum durch eine formsteife Abdeckung verschließbar ist, die lediglich einen länglichen Ausschnitt für den Kopf-und Schulterbereich eines Fahrers aufweist. Die Befestigung dieser etwa in Höhe der Gürtellinie angeordneten Abdeckung am Aufbau ist jedoch nicht näher erläutert.

Aufgabe der Erfindung ist es, eine im Bereich der Gürtellinie verlaufende Abdeckung für den gesamten Fahrgastraum eines umwandelbaren Personenwagens zu schaffen, die bei einfachem Aufbau eine gute Funktion aufweist und mit der ein bequemes Aus- und Einsteigen in den Fahrgastraum ermöglicht wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung von Scharnieren ein Hochklappen der formsteifen Abdeckung ermöglicht wird, so daß das Aus- und Einsteigen in den Fahrgastraum problemlos erfolgen kann. Durch die zwischen der Abdeckung und dem Aufbau angeordneten Verschlüsse wird eine sichere Fixierung der Abdeckung im Fahrbetrieb gewährleistet. Die Viergelenkscharniere mit den schräg nach innen gezogenen, vorderen Lenkern sind so ausgebildet, daß eine funktionsgerechte Halterung der Abdeckung am Aufbau erzielt wird. Die an den hinteren Lenkern angreifenden Gasfedern unterstützen die Öffnungsbewegung der Abdeckung wirkungsvoll. Durch die abnehmbaren Scheibenwischerwellen wird eine bereits vorhandene Hohlwelle als Aufnahme für den Verschluß herangezogen, so daß der bauliche Aufwand des Verschlusses vereinfacht wird.

Ein Ausführungsbeispiel der Erfindung ist in der Zeichnung dargestellt und wird im folgenden näher erläutert.

Es zeigt

Fig. 1    eine Teilseitenansicht auf einen umwandelbaren Personenwagen mit einem Klappverdeck,

Fig. 2    eine Teilseitenansicht auf den umwandelbaren Personenwagen mit einem Festverdeck (Hardtop),

Fig. 3    eine Teilseitenansicht auf den umwandelbaren Personenwagen in einer offenen Version,

Fig. 4    eine Teilseitenansicht auf den umwandelbaren Personenwagen in einer Clubsport-Version,

Fig. 5    eine Draufsicht auf die Fig. 4,

Fig. 6    eine Teildraufsicht entsprechend Fig. 5 auf die Abdeckung mit den Scharnieren, in größerem Maßstab,

Fig. 7    eine Ansicht im Pfeilrichtung R der Fig. 6, in größerem Maßstab,

Fig. 8    einen Schnitt nach der Linie VIII-VIII der Fig. 7 in größerem Maßstab,

Fig. 9    einen Schnitt nach der Linie IX-IX der Fig. 5, in größerem Maßstab,

Fig. 10   einen Schnitt nach der Linie X-X der Fig. 5, in größerem Maßstab,

Fig. 11   einen Schnitt nach der Linie XI-XI der Fig. 5 durch den Windlaufquerträger im Bereich einer Scheibenwischerwelle,

Fig. 12   einen Schnitt nach der Linie XII-XII der Fig. 11,

Fig. 13   eine Seitenansicht auf eine erste Ausführungsform des Verschlusses, teilweise im Schnitt,

Fig. 14   eine Seitenansicht auf eine zweite Ausführungsform des Verschlusses, teilweise im Schnitt,

Fig. 15   einen Schnitt nach der Linie XV-XV der Fig. 5 in größerem Maßstab.

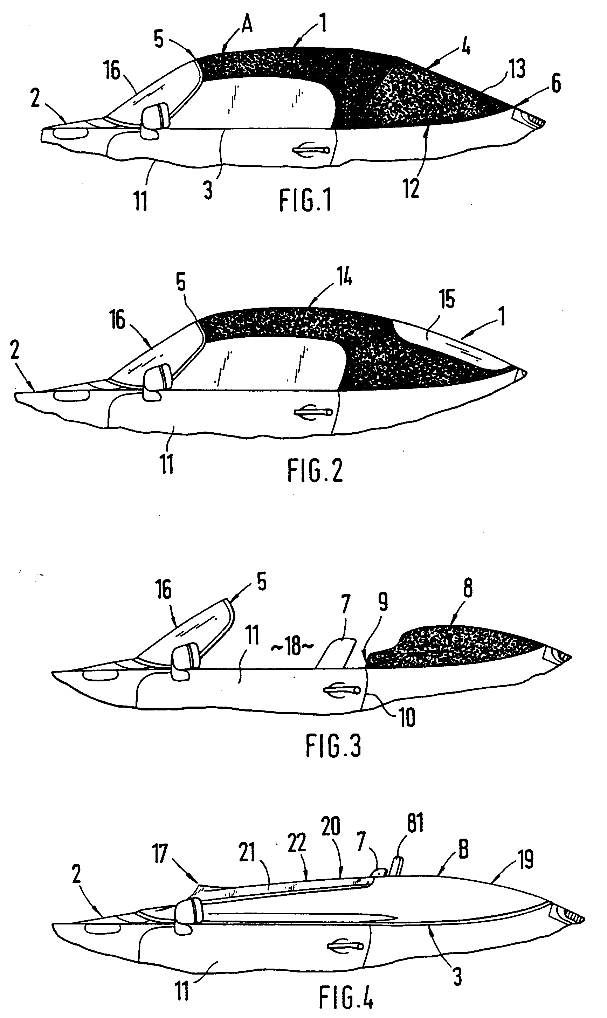

In Fig. 1 ist ein umwandelbarer, zweisitziger Personenwagen 1 dargestellt, dessen Aufbau 2 oberhalb einer Gürtellinie 3 ein Klappverdeck 4 umfaßt, das sich zwischen einem Windschutzscheibenrahmen 5 und einem Heckbereich 6 erstreckt. Das Klappverdeck 4 ist in seiner Schließstellung A über nicht näher dargestellte Verschlüsse am Windschutzscheibenrahmen 5 in Lage gehalten. Nach Lösen der Verschlüsse läßt sich das Klappverdeck 4 hinter die beiden Vordersitze 7 verschwenken.

Gemäß Fig. 3 ist das zurückgeklappte Verdeck 4 unterhalb einer aus Kunststoff gefertigten Fondabdeckung 8 angeordnet, die Schwenkbar am Aufbau 2 angelenkt ist. Die aerodynamisch ausgebildete Fondabdeckung 8 ist in der Draufsicht gesehen, dem bogenförmigen Verlauf der Heckkontur angepaßt. Ein vorderes Ende 9 der Fondabdeckung 8 verläuft im Bereich einer hinteren Begrenzungskante 10 einer seitlichen Tür 11. Zum Schließen der Klappverdecks 4 wird die Fondabdeckung 8 nach hinten hochgeschwenkt. In der Schließstellung A des Klappverdecks 4 ist der im Bereich der Gürtellinie 3 verlaufende Rand 12 des Verdeckbezuges 13 des Klappverdecks 4 mittels U-förmiger Halteglieder an der Fondabdeckung 8 eingehängt, dergestalt, daß der Verdeckbezug 13 die darunterliegende Fondabdeckung 8 abdeckt.

Fig. 2 zeigt ein Festverdeck 14 (Hardtop) für den umwandelbaren Personenwagen 1, das anstelle des Klappverdecks 4 auf den Aufbau 2 aufsetzbar ist. Das Festverdeck 14 kann ein- oder mehrteilig ausgebildet sein und weist ein starres Rückwandfenster 15 auf. Der eine Windschutzscheibe 16 umgebende Windschutzscheibenrahmen 5 ist lösbar am Aufbau 2 befestigt.

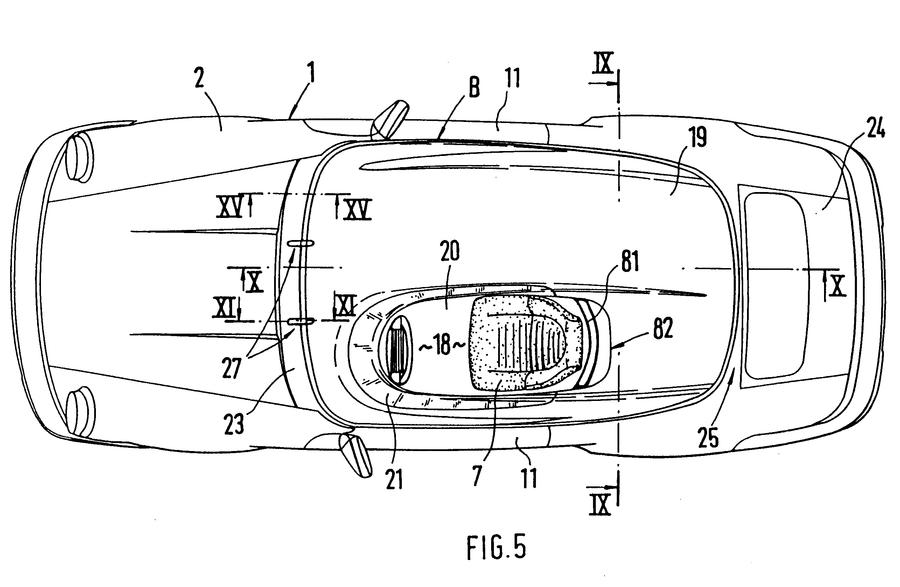

Bei der in den Fig. 4 und 5 dargestellten Clubsport-Version 17 des umwandelbaren Personenwagens 1 ist die ursprüngliche Windschutzscheibe 16 abgenommen und der komplette Fahrgastraum 18 mit einer einstückigen, formsteifen Abdeckung 19 versehen, die randseitig etwa in Höhe der Gürtellinie 3 verläuft. Die Abdeckung 19 weist lediglich einen länglichen Ausschnitt 20 für den Kopf- und Schulterbereich eines Fahrers auf. Zumindest der vordere und die beiden seitlichen Randbereiche der Ausnehmung 20 sind von einer einstückigen Sichtscheibe 21 umgeben, die eine geringe Höhe aufweist. Die aus Plexiglas oder Glas hergestellte Sichtscheibe 21 ist durch Kleben mit der aus Kunststoff gefertigen Abdeckung 19 verbunden. Hinter dem Ausschnitt 20 ist die eine aerodynamische Form aufweisende Abdeckung 19 hochgezogen und fluchtet etwa mit einer oberen Begrenzungskante 22 der Sichtscheibe 21. Die Abdeckung 19 erstreckt sich in Querrichtung gesehen, über einen wesentlichen Teil der Breite des Personenwagens und ist an einen oberen Rand der beiden Türen 11 angeschlossen. In Längsrichtung gesehen, erstreckt sich die Abdeckung 19 zwischen einem vorderen Windlaufquerträger 23 und einem oberhalb eines Heckdeckels 24 angeordneten, kastenförmigen Querträger 25 (Fig. 5).

Um ein bequemes Aus- und Einsteigen in den Fahrgastraum 18 zu gewährleisten, ist die Abdeckung 19 unter Zwischenschaltung von Scharnieren 26 schwenkbar am Aufbar 2 gelagert. Zur Fizierung der Abdeckung 19 in ihrer geschlossenen Stellung B sind zwischen der Abdeckung 19 und dem Aufbau 2 lösbare Verschlüsse 27 vorgesehen, die von Fahrgastraum 18 aus und/oder von der Fahrzeugaußenseite her betätigbar sind (Fig. 5).

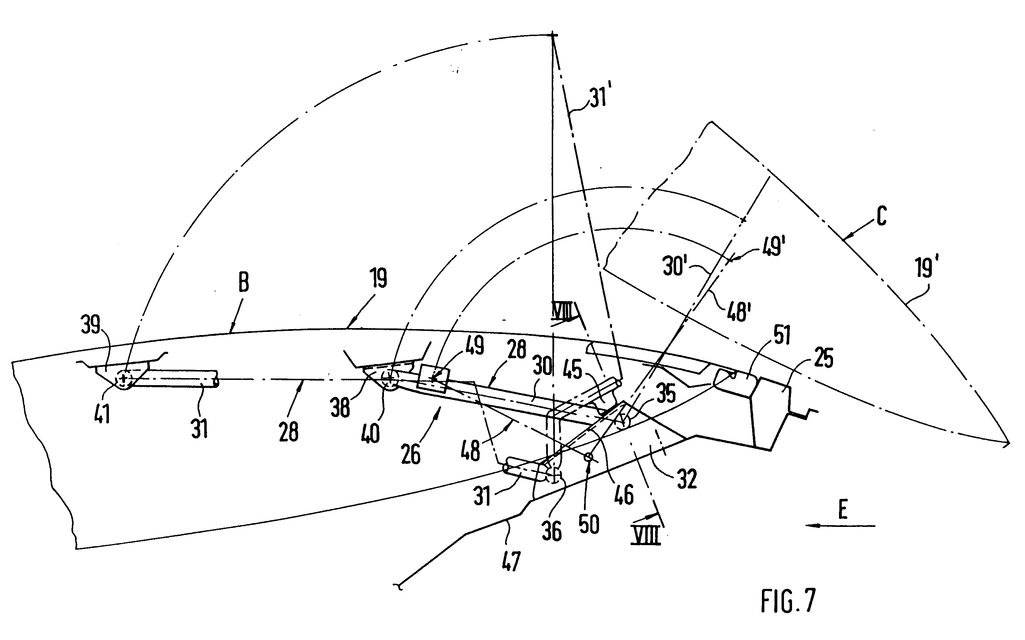

Die Abdeckung 19 ist von der etwa horizontal ausgerichteten geschlossenen Stellung B nach hinten in eine schrägverlaufende Offenstellung C bewegbar und umgekehrt. Gemäß Fig. 7 sind die Scharniere 26 im hinteren Bereich der Abdeckung 19 - und zwar an beiden Längsseiten - angeordnet und vorzugsweise als Viergelenkscharniere 28 ausgebildet.

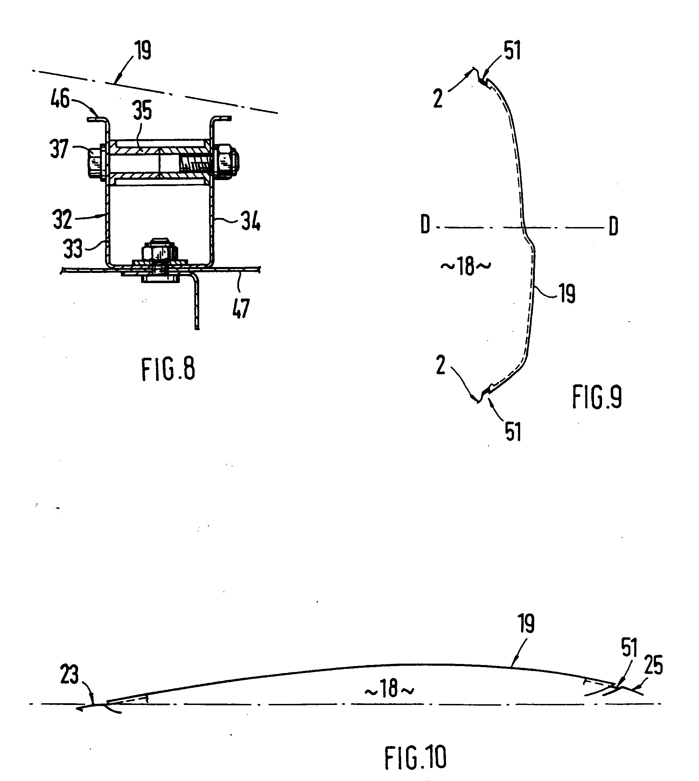

Jedes Viergelenkscharnier 28 umfaßt zwei rohrförmig ausgebildete Lenker 30, 31, die einerseits mit dem Aufbau 2 und andererseits mit der Abdeckung 19 drehbar verbunden sind. Zur aufbauseitigen Anlenkung ist für beide Lenker 30, 31 jedes Viergelenkscharniers 28 ein gemeinsamer Lagerbock 32 vorgesehen, der etwa parallel zu einer Längsmittelebene D-D ausgerichtet ist und mit seitlichem Abstand zu dieser verläuft. Der Lagerbock 32 ist im Querschnitt gesehen, etwa U-förmig ausgebildet und nimmt zwischen zwei aufrechten Stegen 33, 34 querverlaufende, einseitige Rohrabschnitte 35, 36 der beiden Lenker 30, 31 unter Vermittlung eines Bolzens oder einer Schraube 37 auf. Die offene Seite des U-förmigen Lagerbocks 32 ist nach oben gerichtet (Fig. 8).

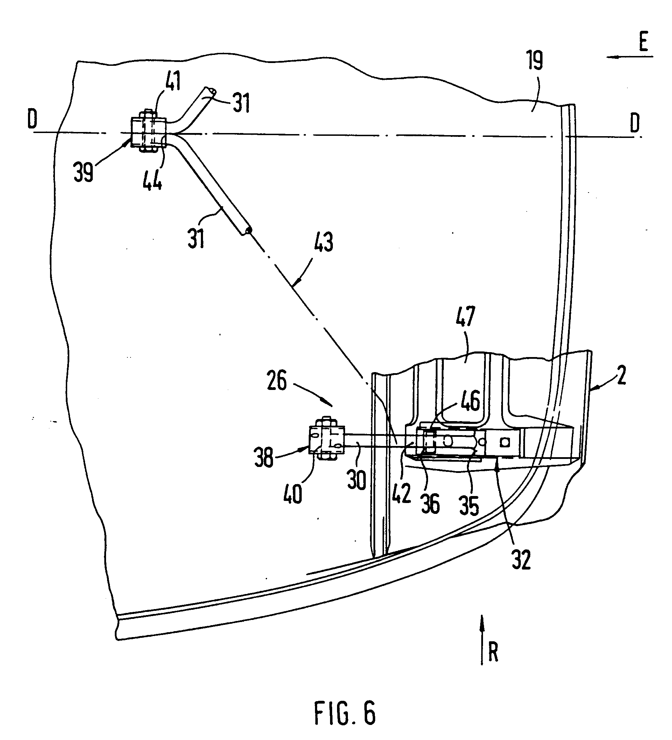

An der Abdeckung 19 sind getrennte Lager 38, 39 für die Lenker 30, 31 des Viergelenkscharniers 28 vorgesehen (Fig. 6). Die Lager 38 für die in Fahrtrichtung gesehen hintenliegenden Lenker 30 sind in einem seitlich außenliegenden Bereich der Abdeckung 19 angeordnet. Für die vorneliegenden Lenker 31 beider Viergelenkscharniere 28 ist ein gemeinsames, in der Fahrzeuglängsmittelebene D-D angebrachtes Lager 39 vorgesehen. An ihren oberen Enden weisen die Lenker 30, 31 querverlaufende Rohrabschnitte 40, 41 auf, durch die Schrauben der Lager 38, 39 hindurchgeführt sind. Der kürzere, hintenliegende Lenker 30 ist geradlinig ausgebildet und verläuft parallel zur Fahrzeugslängsmittelebene D-D. Die beiden Lenker 31 setzen sich aus zwei endseitigen, etwa in Fahrzeuglängsrichtung verlaufenden Abschnitten 42, 44 und einem mittleren, schräggerichteten Abschnitt 43 zusammen, wobei der Abschnitt 43 angrenzend an die Innenseite der Abdeckung 19 verläuft. An beiden Lenkern 31 sind örtlich Anschläge 45 angebracht, durch die die Abdeckung 19 in ihrer Offenstellung C fixiert ist. Die Anschläge 45 stützen sich an innenliegenden Flanschen 46 des aufbauseitigen Lagerbocks 32 ab (Fig. 7).

Der aufbauseitige Lagerbock 32 ist in der Seitenansicht gesehen, etwa dreieckförmig ausgebildet und mittels Schrauben an einer benachbart dem Querträger 25 verlaufenden Aufbauwand 47 befestigt. Zur Unterstützung der Öffnungsbewegung der Abdeckung 19 ist eine Gasfeder 48 vorgesehen, deren eines Ende 49 mit dem hinteren Lenker 30 und deren anderes Ende 50 mit dem Lagerbock 32 verbunden ist. Von der Gasfeder 48 ist in den Fig. 6 und 7 lediglich eine Mittellinie dargestellt. Das lenkerseitige Ende 49 ist benachbart dem Querrohr 40 an den Lenker 30 angeschlossen. Das andere Ende 50 der Gasfeder 48 ist - in Längsrichtung gesehen - zwischen den beiden Querrohren 35, 36 gelenkig mit dem Lagerbock 32 verbunden. In der Schließstellung B verläuft die Gasfeder 48 unterhalb des Lenkers 30, wogegen in der Offenstellung C die Gasfeder 48' den Lenker 30' in einem mittleren Bereich seiner Längserstreckung kreuzt.

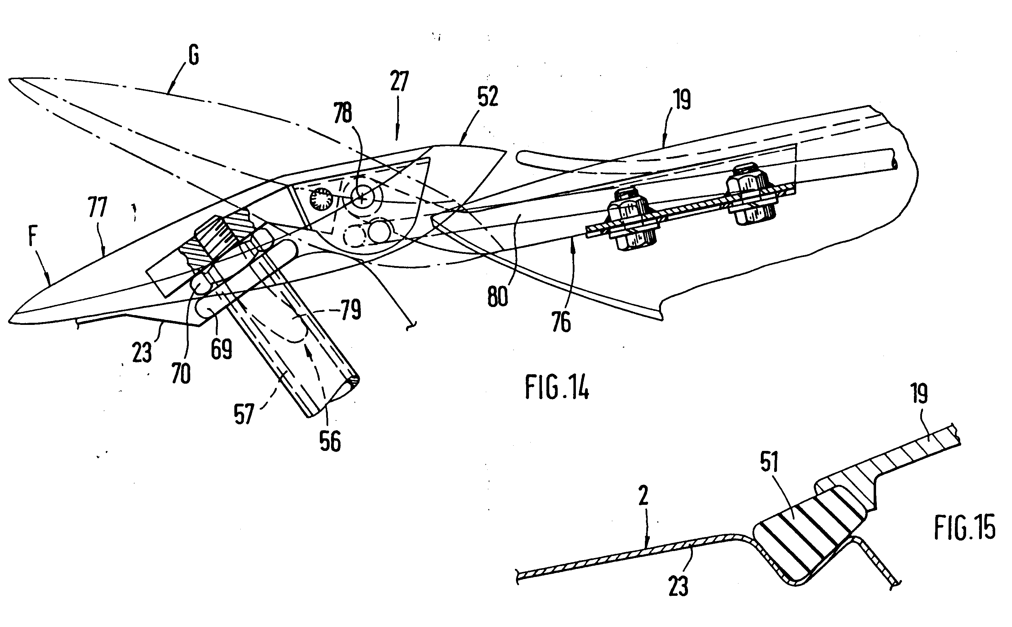

Die Abdeckung 19 ist umlaufend unter Zwischenschaltung eines Dichtkörpers 51 an den Aufbau 2 angechlossen, wobei der Dichtkörper 51 entweder am Aufbau 2 oder an der Abdeckung 19 angebracht ist (Fig. 15). Es besteht aber auch die Möglichkeit, daß sowohl am Aufbau 2 als auch an der Abdeckung 19 ein Dichtkörper 51 vorgesehen ist.

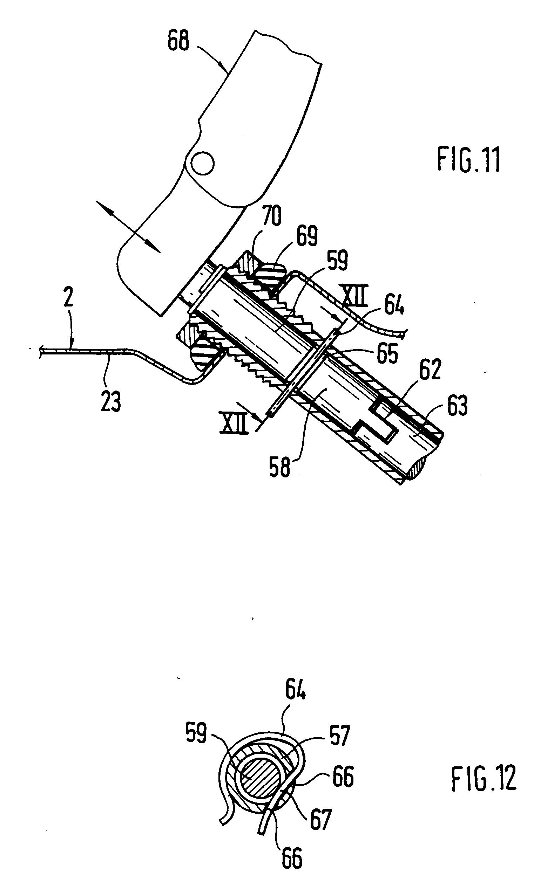

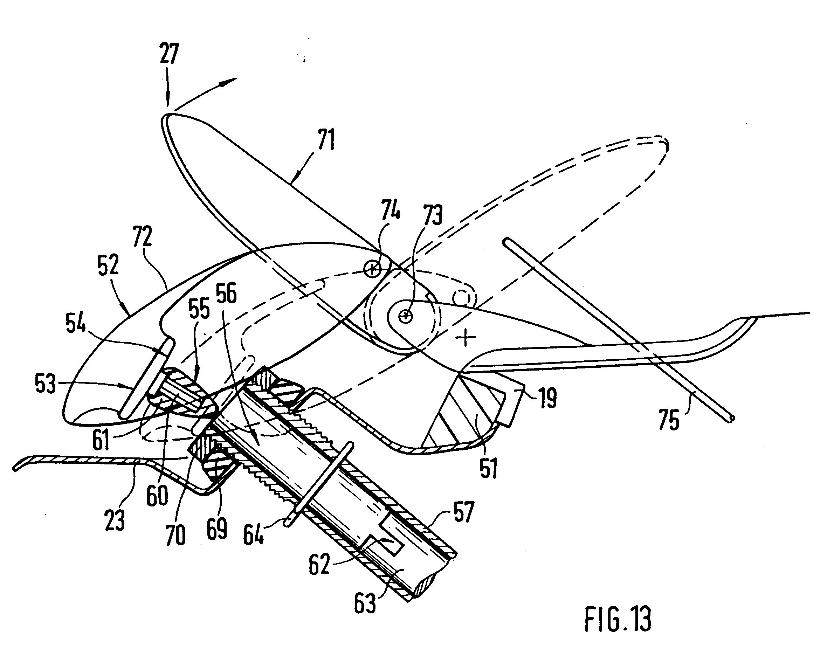

Gemäß Fig. 5 sind die beiden lösbaren Verschlüsse 27 zwischen einem vorderen Randbereich der Abdeckung 19 und dem angrenzenden Windlaufquerträger 23 angeordnet. Jeder Verschluß 27 umfaßt ein an der Abdeckung 19 befestigtes Verschlußglied 52, das an seinem freien Ende 53 benachbart einer Auflagefläche 54 einen nach unten ragenden Zapfen 55 aufweist, der mit einer aufbauseitigen Aufnahme 56 zusammenwirkt. Die Aufnahme 56 für den Zapfen 55 wird durch eine Hohlwelle 57 gebildet, die normalerweise eine Scheibenwischerwelle 58 aufnimmt (Fig. 11). Nach Herausziehen eines abnehmbaren Abschnittes 59 der Scheibenwischerwelle 58 kann der Zapfen 55 in die Hohlwelle 57 eingesetzt werden. Der Zapfen 55 setzt sich gemäß Fig. 13 aus einem zylindrischen Kern 60 und einer aus Kunststoff oder Gummi gefertigen Ummantelung 61 zusammen, wobei sich der querschnitt des Zapfens 55 zu seinem freien untenliegenden Ende hin kontinuierlich verringert.

Der abnehmbare Abschnitt 59 der Scheibenwischerwelle 58 wirkt über eine formschlüssige Verbindung 62 (Nut-Federanordnung) mit einem feststehenden Abschnitt 63 der Scheibenwischerwelle 58 zusammen (Fig. 11). Zur axialen Festlegung des abnehmbaren Abschnitts 59 in seiner Einbaulage ist eine Sicherungsfeder 64 vorgesehen, die mit einer Ringnut 65 des Abschnitts 59 und der Hohlwelle 57 zusammenwirkt. Die Sicherungsfeder 64 umgibt die Hohlwelle 57, wobei an der Hohlwelle örtlich eine Öffnung 66 zum Einstecken eines Schenkels 67 der Sicherungsfeder 64 angeordnet ist. Der Abschnitt 59 der Scheibenwischerwelle 58 ist einstückig mit einem Wischerarm 68 ausgebildet. Zur Befestigung der Hohlwelle 57 ist auf ihr vorstehendes Ende ein Gummiring 69 und eine Mutter 70 aufgesetzt.

Gemäß Fig. 13 umfaßt das Verschlußglied 52 ein an der Abdeckung 19 schwenkbar gelagertes Griffteil 71, das drehbar mit einem Spannglied 72 verbunden ist. Am Spannglied 72 ist der Zapfen 55 angeordnet. Ein Drehpunkt 73 des Griffteils 71 und der Drehpunkt 74 des Spanngliedes 72 sind derart versetzt zueinander angeordnet, daß eine Art Kniehebelverschluß gebildet wird. Ein am Griffteil 71 angreifendes, durch die Abdeckung 19 in den Fahrgastraum 18 hineinragendes Gestänge 75 sorgt dafür, daß der Verschluß 27 auch vom Fahrgastraum 18 aus betätigbar ist.

Bei der in Fig. 14 dargestellten Ausführungsform wird das Verschlußglied 52 durch ein an der Innenseite der Abdeckung 19 befestigtes Teil 76 und ein Griffteil 77 gebildet, die bei 78 drehbar miteinander verbunden sind. Am Griffteil 77 ist der mit der Aufnahme 56 zusammenwirkende Zapfen 79 angeordnet. Der in die Aufnahme 56 hineinragende Bereich des Zapfens 79 weist einen kreisbogenförmigen Verlauf auf und stützt sich örtlich an der Aufnahme 56 ab.

Am Griffteil 77 greift entfernt vom Drehpunkt 78 ein Gestänge 80 an, dessen in den Fahrgastraum 18 hineinragendes Ende mit einer an der Abdeckung 19 vorgesehenen, nicht näher dargestellten Betätigungseinrichtung zusammenwirkt.

In der verriegelten Stellung des Verschlusses 27 nimmt das Griffteil 77 eine Stellung F ein, wogegen die entriegelte Stellung des Griffteils 77 mit G bezeichnet ist.

Ferner ist bei der einsitzigen Clubsport-Variante 17 ein Überrrollbügel 81 vorgesehen, der am Aufbau 2 befestigt ist und sich im Bereich des Ausschnittes 20 der Abdeckung 19 erstreckt. Der Überrollbügel 81 weist eine geringe Breite auf und ist hinter der Rückenlehne des Vordersitzes 7 benachbart einem hinteren Ende 82 des Ausschnittes 20 vorgesehen. Für die Fondabdeckung 8 gemäß Fig. 3 können dieselben Viergelenkscharniere 28 verwendet werden wie für die Abdeckung 19.

**Patentansprüche**

1. Umwandelbarer Personenwagen mit seitlichen Türen und einem Fahrgastraum, der mit einer einstückigen, formsteifen Abdeckung versehen ist, die etwa in Höhe der Gürtellinie des offenen Aufbaus verläuft und mit Ausnahme eines länglichen Ausschnittes für den Fahrer den gesamten Fahrgastraum verschließt, wobei zumindest ein vorderer und seitliche Teilbereiche des Ausschnittes von einer eine geringe Höhe aufweisenden Sichtscheibe umgeben sind, dadurch gekennzeichnet, daß die aus Kunststoff gefertigte Abdeckung (19) unter Zwischenschaltung von Scharnieren (26) schwenkbar am Aufbau (2) gelagert ist und daß zur Fixierung der Abdeckung (19) in ihrer geschlossenen Stellung (B) lösbare Verschlüsse (27) zwischen der Abdeckung (19) und dem Aufbau (2) vorgesehen sind, wobei jeder Verschluß (27) ein an der Abdeckung (19) befestigtes Verschlußglied (52) umfaßt, das mit einem Zapfen (55, 79) in eine aufbauseitige Aufnahme (56) eingreift und daß die Aufnahme (56) durch eine Hohlwelle (57) gebildet wird, die normalerweise eine Scheibenwischerwelle (58) aufnimmt, und daß nach Herausziehen eines abnehmbaren Abschnittes (59) der Scheibenwischerwelle (58) der Zapfen (55, 79) des Verschlußgliedes (52) in die Aufnahme (56) einsetzbar ist.

2. Umwandelbarer Personenwagen nach Anspruch 1, dadurch gekennzeichnet, daß die Abdeckung (19) von der etwa horizontal ausgerichteten, geschlossenen Stellung (B) nach hinten in eine schrägverlaufende Offenstellung (C) bewegbar ist und umgekehrt.

3. Umwandelbarer Personenwagen nach Anspruch 1, dadurch gekennzeichnet, daß an beiden Längsseiten der Abdeckung (19) je ein Viergelenkscharnier (28) angeordnet ist, das zwei Lenker (30, 31) umfaßt, die einerseits mit dem Aufbau (2) und andererseits mit der Abdeckung (19) drehbar verbunden sind.

4. Umwandelbarer Personenwagen nach Anspruch 3, dadurch gekennzeichnet, daß aufbauseitig ein gemeinsamer Lagerbock (32) zur Anlenkung der beiden Lenker (30, 31) jedes Viergelenkscharniers (28) vorgesehen ist.

5. Umwandelbarer Personenwagen nach Anspruch 3, dadurch gekennzeichnet, daß an der Abdeckung (19) getrennte Lager (38, 39) für die Lenker (30, 31) angeordnet sind, wobei für die in Fahrtrichtung (E) gesehen, vorneliegenden Lenker (31) beider Viergelenkscharniere (28) ein gemeinsames, etwa in der Fahrzeuglängsmittelebene (D-D) verlaufendes Lager (39) vorgesehen ist.

6. Umwandelbarer Personenwagen nach Anspruch 5, dadurch gekennzeichnet, daß die vorneliegenden Lenker (31) beider Viergelenkscharniere (28) vom außenliegenden, aufbauseitigen Lagerbock (32) schräg nach innen zum mittleren Lager (39) der Abdeckung (19) verlaufen.

7. Umwandelbarer Personenwagen nach Anspruch 5, dadurch gekennzeichnet, daß an den vorneliegenden Lenkern (31) benachbart des aufbauseitigen Lagerbocks (32) jeweils ein Anschlag (45) angebracht ist, der sich in Offenstellung (C) der Abdeckung (19) an einem Flansch (46) des Lagerbocks (32) abstützt.

8. Umwandelbarer Personenwagen nach Anspruch 1, dadurch gekennzeichnet, daß die Abdeckung (19) in ihrer geschlossenen Stellung (B) unter Zwischenschaltung eines umlaufenden Dichtkörpers (51) auf dem Aufbau (2) aufliegt.

9. Umwandelbarer Personenwagen nach Anspruch 1, dadurch gekennzeichnet, daß die lösbaren Verschlüsse (27) zwischen einem vorderen Randbereich der Abdeckung (19) und einem angrenzenden Windlaufquerträger (23) des Aufbaus (2) angeordnet sind.

10. Umwandelbarer Personenwagen nach Anspruch 1, dadurch gekennzeichnet, daß der abnehmbare Abschnitt (59) der Scheibenwischerwelle (58) über eine formschlüssige Verbindung (62) (Nut-Federanordnung) mit einem feststehenden Abschnitt (63) der Scheibenwischerwelle (58) verbindbar ist.

11. Umwandelbarer Personenwagen nach Anspruch 1, dadurch gekennzeichnet, daß zur Fixierung des abnehmbaren Abschnitts (59) der Scheibenwischerwelle (58) in ihrer Einbaulage eine Sicherungsfeder (64) vorgesehen ist, die mit einer Ringnut (65) des abnehmbaren Abschnitts (59) und mit der Hohlwelle (57) zusammenwirkt.

12. Umwandelbarer Personenwagen nach Anspruch 1, dadurch gekennzeichnet, daß das Verschlußglied (52) ein drehbar an der Abdeckung (19) gelagertes Griffteil (71) umfaßt, das gelenkig mit einem Spannglied (72) verbunden ist, wobei am Spannglied (72) benachbart einer Auflagefläche (54) der nach unten vorstehende Zapfen (55) angeordnet ist.

13. Umwandelbarer Personenwagen nach Anspruch 1, dadurch gekennzeichnet, daß das Verschlußglied (52) ein an der Innenseite der Abdeckung (19) befestigtes Teil (76) umfaßt, das über einen Drehpunkt (78) gelenkig mit einem Griffteil (77) verbunden ist, wobei am Griffteil (77) der mit der Aufnahme (56) zusammenwirkende Zapfen (79) vorgesehen ist.

14. Umwandelbarer Personenwagen nach Anspruch 3, dadurch gekennzeichnet, daß der in Fahrtrichtung gesehen hintenliegende Lenker (30) des Viergelenkscharniers (28) mit einer Gasfeder (48) zusammenwirkt.

15. Umwandelbarer Personenwagen nach Anspruch 14, dadurch gekennzeichnet, daß die Gasfeder (48) an ein oberes Ende des hintenliegenden Lenkers (30) und an den feststehenden, aufbauseitigen Lagerbock (32) angeschlossen ist, wobei der lagerbockseitige Anlenkpunkt (50) für die Gasfeder (48) - in Längsrichtung gesehen - zwischen den Querachsen (35, 36) der beiden Lenker (31) verläuft.

16. Umwandelbarer Personenwagen, der mit einem Überrollbügel versehen ist, nach Anspruch 1, dadurch gekennzeichnet, daß sich der Überrollbügel (81) innerhalb des Ausschnittes (20) der Abdeckung (19) erstreckt, und zwar in einem hintenliegenden Randbereich (82) des Ausschnittes (20).

**Claims**

1. A convertible passenger car with side doors and a passenger compartment, provided with a one-piece dimensionally rigid cover extending substantially at the level of the mid-line of the open body and, apart from an elongate opening for the driver, closing off the entire passenger compartment, at least a front partial area and lateral partial areas of the opening being surrounded by a windscreen of low height, characterized in that the cover (19) produced from plastics material is mounted pivotably on the body (2) with the interposition of hinges (26), and releasable closure means (27) are provided between the cover (19) and the body (2) for fixing the cover (19) in its closed position (B), each closure means (27) comprising a closure member (52) which is secured to the cover (19) and which engages with a pin (55, 79) in a receiving means (56) on the body, and the receiving means (56) is formed by a hollow shaft (57) normally receiving a windscreen-wiper shaft (58), and after a removable portion (59) of the windscreen-wiper shaft (58) has been withdrawn the pin (55, 79) of the closure member (52) can be inserted into the receiving means (56).

2. A convertible passenger car according to Claim 1, characterized in that the cover (19) is movable from the substantially horizontally orientated closed position (B) towards the rear into a sloping open position (C) and *vice versa.*

3. A convertible passenger car according to Claim 1, characterized in that a four-joint hinge (28) comprising two support arms (30, 31) pivotally connected at one end to the body (2) and at the other end to the cover (19) is arranged on each of the two longitudinal sides of the cover (19).

4. A convertible passenger car according to Claim 3, characterized in that a common bearing support (32) for pivotally mounting the two support arms (30, 31) of each four-joint hinge (28) is provided on the body.

5. A convertible passenger car according to Claim 3, characterized in that separate bearings (38, 39) for the support arms (30, 31) are arranged on the cover (19), a common bearing (39) which extends substantially in the longitudinal median plane (D-D) of the vehicle being provided for the forward support arms (31) of the two four-joint hinges (28) as viewed in the direction of travel (E).

6. A convertible passenger car according to Claim 5, characterized in that the forward support arms (31) of the two four-joint hinges (28) extend obliquely inwards from the outside bearing support (32) on the body to the middle bearing (39) of the cover (19).

7. A convertible passenger car according to Claim 5, characterized in that a stop (45) supported on a flange (46) on the bearing support (32) in the open position (C) of the cover (19) is attached in each case to the forward support arms (31) adjacent to the bearing support (32) on the body.

8. A convertible passenger car according to Claim 1, characterized in that in its closed position (B) the cover (19) rests on the body (2) with the interposition of a continuous sealing means (51).

9. A convertible passenger car according to Claim 1, characterized in that the releasable closure means (27) are arranged between a forward edge region of the cover (19) and an adjacent scuttle (23) of the body (2).

10. A convertible passenger car according to Claim 1, characterized in that the removable portion (59) of the windscreen-wiper shaft (58) can be connected to a stationary portion (63) of the windscreen-wiper shaft (58) by way of a positively locking connexion (62) (groove/spring arrangement).

11. A convertible passenger car according to Claim 1, characterized in that, in order to fix the removable portion (59) of the windscreen-wiper shaft (58) in its fitted position, a retaining spring (64) cooperating with an annular groove (65) in the removable portion (59) and with the hollow shaft (57) is provided.

12. A convertible passenger car according to Claim 1, characterized in that the closure member (52) comprises a handle part (71) mounted rotatably on the cover (19) and pivotably connected to a tensioning member (72), the downwardly projecting pin (55) being arranged on the tensioning member (72) adjacent to an abutment face (54).

13. A convertible passenger car according to Claim 1, characterized in that the closure member (52) comprises a part (76) secured to the inside of the cover (19) and connected in an articulated manner to a handle part (77) by way of a pivot (78), the pin (79) which cooperates with the receiving means (56) being provided on the handle part (77).

14. A convertible passenger car according to Claim 3, characterized in that the support arm (30) - at the rear as viewed in the direction of travel - of the four-joint hinge (28) cooperates with a gas spring (48).

15. A convertible passenger car according to Claim 14, characterized in that the gas spring (14) is connected to an upper end of the support arm (30) towards the rear and to the stationary bearing support (32) on the body, the pivot point (50) - on the bearing support - for the gas spring (48) extending between the transverse shafts (35, 36) of the two support arms (31) as viewed in the longitudinal direction.

16. A convertible passenger car, provided with a roll bar (81), according to Claim 1, characterized in that the roll bar (81) extends inside the opening (20) of the cover (19), namely in a rear edge area (82) of the opening (20).

**Revendications**

1. Voiture de tourisme transformable comportant des portes latérales et un habitacle, qui est pourvue d'une couverture rigide, d'une seule pièce, s'étendant à peu près à hauteur de la ligne d'équateur de la carrosserie ouverte et qui ferme la totalité de l'habitacle, à l'exception d'une découpe allongée pour le conducteur, au moins une partie avant et des parties latérales de la découpe étant entourées par une vitre transparente de faible hauteur, caractérisée en ce que la couverture (19) en matière plastique est montée pivotante sur la carrosserie (2), par des charnières (26) et en ce que pour fixer la couverture (19) dans sa position (B) fermée, il est prévu des fermetures (27) amovibles entre la couverture (19) et la carrosserie (2), chaque fermeture (27) comprenant un organe fixé sur la couverture (19), qui s'engage par un tenon (55, 79), dans un logement (56) côté carrosserie et en ce que le logement (56) est formé par un arbre creux (57) qui loge normalement un arbre d'essuie-glace (58) et en ce qu'après extraction d'une partie (59) amovible de l'arbre d'essuie-glace (58), le tenon (55, 79) de l'organe de fermeture (52) peut être inséré dans le logement (56).

2. Voiture de tourisme transformable selon la revendication 1, caractérisée en ce que la couverture (19) peut passer d'une position (B) fermée, dirigée à peu près horizontalement, vers l'arrière, dans une position ouverture (C), s'étendant obliquement, et inversement.

3. Voiture de tourisme transformable selon la revendication 1, caractérisée en ce qu'il est placé, sur chacun des deux grands côtés de la couverture (19), une charnière en quadrilatère articulé (28) qui comprend deux bras (30, 31) qui sont assemblés tournants, d'une part avec la carrosserie (2) et d'autre part avec la couverture (19).

4. Voiture de tourisme transformable selon la revendication 3, caractérisée en ce qu'il est prévu, côté carrosserie, un support (32) commun pour l'articulation des deux bras (30, 31) de chaque charnière (28).

5. Voiture de tourisme transformable selon la revendication 3, caractérisée en ce qu'il est prévu sur la couverture (19), des paliers (38, 39) séparés pour les bras (30, 31), un palier (39) commun, s'étendant à peu près dans le plan médian longitudinal (D-D) du véhicule, étant prévu pour les bras (31), situés à l'avant, dans le sens de la marche (E), des deux charnières (28).

6. Voiture de tourisme transformable selon la revendication 5, caractérisée en ce que les bras (31) situés à l'avant des deux charnières (28) s'étendent obliquement vers l'intérieur, du support (32), côté carrosserie, situé à l'extérieur, vers le palier (39) central de la couverture (19).

7. Voiture de tourisme transformable selon la revendication 5, caractérisée en ce qu'il est placé sur chacun des bras (31) situés à l'avant, à proximité du support (32) côté carrosserie, une butée (45) qui, en position ouverte (C) de la couverture (19), prend appui contre une bride (46) du support (32).

8. Voiture de tourisme transformable selon la revendication 1, caractérisée en ce que la couverture (19) repose dans sa position fermée (B), sur la carrosserie (2), par interposition d'un corps d'étanchéité (51) l'entourant.

9. Voiture de tourisme transformable selon la revendication 1, caractérisée en ce que les fermetures (27) amovibles sont placées entre une zone de bordure avant de la couverture (19) et une arcade d'auvent (23) adjacente de la carrosserie.

10. Voiture de tourisme transformable selon la revendication 1, caractérisée en ce que la partie (59) amovible de l'arbre d'essuie-glace (58), peut être assemblée avec une partie (63) fixe de l'arbre (58), par un assemblage (62) par concordance de forme (à rainure et languette).

11. Voiture de tourisme transformable selon la revendication 1, caractérisée en ce que pour fixer la partie (59) amovible de l'arbre d'essuie-glace (58) dans sa position de montage, il est prévu un ressort de blocage (64) qui coopère avec une rainure annulaire (65) de la partie (59) amovible et avec l'arbre creux (57).

12. Voiture de tourisme transformable selon la revendication 1, caractérisée en ce que l'organe de fermeture (52) comprend une poignée (71) qui est assemblée articulée avec un organe de serrage (72), le tenon (55), faisant saillie vers le bas, étant placé sur l'organe de serrage (72), à proximité d'une surface d'appui (54).

13. Voiture de tourisme transformable selon la revendication 1, caractérisée en ce que l'organe de fermeture (52) comprend un élément (76), fixé sur le côté intérieur de la couverture (19), qui est assemblé articulé avec une poignée (77), par un pivot (78), le tenon (79) coopérant avec le logement (56) étant prévu sur la poignée (77).

14. Voiture de tourisme transformable selon la revendication 3, caractérisée en ce que le bras (30) situé à l'arrière, dans le sens de la marche, de la charnière en quadrilatère articulé (28) coopère avec un ressort à gaz (48).

15. Voiture de tourisme transformable selon la revendication 14, caractérisée en ce que le ressort à gaz (48) est raccordé à une extrémité supérieure du bras (30) situé à l'arrière et au support (32) fixe, côté carrosserie, le point d'articulation (50), côté support, du ressort à gaz (48) s'étendant - vu dans la direction longitudinale - entre les axes transversaux (35, 36) des deux bras (31).

16. Voiture de tourisme transformable, dotée d'un arceau de sécurité, selon la revendication 1, caractérisée en ce que l'arceau de sécurité (81) s'étend à l'intérieur de la découpe (20) de la couverture (19), à savoir dans une zone de bordure (82) arrière de la découpe (20).

FIG.1

FIG.2

FIG.3

FIG.4

FIG.5

FIG. 6

FIG. 7

EP 0 305 690 B1

FIG.8

FIG.9

FIG.10

EP 0 305 690 B1

FIG.11

FIG.12

FIG.13

EP 0 305 690 B1

FIG.14

FIG.15